# EUROPÄISCHE PATENTSCHRIFT

(11) **EP 3 857 303 B1**
(45) Veröffentlichungstag und Bekanntmachung des Hinweises auf die Patenterteilung: **11.06.2025**
(21) Anmeldenummer: 19780139.2
(22) Anmeldetag: 26.09.2019
(51) Int. Cl.: G03B 13/20, G03B 13/32, G03B 17/18, G03B 13/36, G03B 17/02, H04N 23/10, H04N 23/67, H04N 5/222

(54) **VERFAHREN ZUR FOKUSEINSTELLUNG EINER FILMKAMERA**
METHOD FOR SETTING THE FOCUS OF A FILM CAMERA
PROCÉDÉ DE RÉGLAGE DE MISE AU POINT D'UNE CAMÉRA

(30) Priorität: 26.09.2018 AT 601562018
(43) Veröffentlichungstag der Anmeldung: 04.08.2021
(73) Patentinhaber: qinematiq GmbH, 1060 Wien (AT)
(72) Erfinder: Waitz, Martin, 1060 Wien (AT)
(74) Vertreter: Babeluk Patentanwälte GmbH
(86) Internationale Anmeldenummer: PCT/AT2019/060316
(87) Internationale Veröffentlichungsnummer: WO 2020/061604

(56) Entgegenhaltungen:
- EP-A1- 2 947 510
- EP-A1- 2 947 510
- WO-A1-2012/126868
- WO-A1-2012/126868
- US-A1- 2016 088 212
- US-A1- 2016 088 212

## Beschreibung

Die vorliegende Erfindung betrifft ein Verfahren zur Fokuseinstellung einer Filmkamera, bei dem mit einem Messgerät, das in Bereich der Filmkamera angeordnet ist, Entfernungsinformationen gewonnen werden, die zur Fokuseinstellung der Filmkamera verwendet werden.

Um die Fokuseinstellung einer Filmkamera zu verbessern, werden fallweise Messgeräte verwendet, die verschiedenen Bildbereichen Entfernungsdaten zuordnen. Dadurch kann eine Bedienungsperson beispielsweise einen Bildbereich auswählen, um eine Scharfstellung auf diesen Bildbereich zu bewirken.

Aus der AT 511 312 B1 ist bekannt, dass ein Tiefenbild mit einer stereoskopen Kameraanordnung erzeugt werden kann, um dadurch den Fokus einer Kamera zu steuern. Das Realbild der Messkamera und das Tiefenbild der Messkamera werden auf einem TouchPC oder Monitor dargestellt. Durch manuelle Auswahl eines Bildbereichs oder durch automatisiertes Tracking kann in diesem Bereich die Entfernung gemessen werden und in Folge wird darauf der Fokus der Film- oder Fernsehkamera verstellt.

In der US 2016/088212 A1 wird ein Verfahren beschrieben, bei dem Tiefeninformation durch ein durch ein Messgerät aufgenommen werden und direkt in das Realbild der Filmkamera eingerechnet wird. Dies ist sehr rechenaufwändig und langsam und wird unter genauer Kenntnis über die Position des Messgeräts zur Filmkamera durchgeführt.

In der EP 2 947 510 A1 und der WO 2012/126868 A1 werden verschiedene Möglichkeiten beschrieben, wie Messgeräte zur Distanzmessung mit einer Filmkamera verbunden werden können und deren Tiefeninformationen ähnlich wie in der US 2016/088212 A1 in das Realbild der Filmkamera eingerechnet werden können.

Nachteile der bekannten Lösung sind:
- Der Kameramann kann während seiner Tätigkeit (Führen der Kamera, Einstellen des Bildbereichs) keinen TouchPC oder anderen Monitor bedienen, um selbstständig den Fokus zu ziehen.
- Das Videobild des Messgeräts hat eine andere Perspektive und anderen Bildbereich als das Bild der Filmkamera. Der Kameramann oder Fokus Assistent sieht nicht genau, welche Motive in der Szenerie sind, da die Bildbereiche (Perspektiven) der Hilfskamera und Filmkamera unterschiedlich sind.
- Am TouchPC kann das Bild der Realkamera nicht eingesehen werden, d.h. das Resultat des Fokussiervorgangs ist nicht ersichtlich. Der Fokus Assistent braucht daher einen zweiten Hilfsmonitor (den Video-Assist 3a), um auch das Bild der Realkamera einzusehen.

Es ist auch festzustellen, dass dann, wenn neben der Filmkamera 1 ein 3D Sensor, z.B. ein stereoskopes Messgerät, angeordnet wird, im Realbild des Messgeräts immer ein anderer Bildausschnitt zu sehen ist, wie im Bild der Filmkamera 1. Da das Bild des Messgerätes oftmals weitwinkeliger ist, als das Bild der Filmkamera 1, hat das den Vorteil, dass ein Operator Objekte schon ausmessen kann, bevor sie in das Bild der Filmkamera 1 kommen. Es besteht aber der grundsätzliche Nachteil, dass der Operator nicht sieht, wie das Filmmaterial aufgezeichnet wird. Dazu bräuchte er einen zweiten Monitor beim Messgerät, welches das Bild der Filmkamera 1 anzeigt, wobei er immer zwischen Monitor des Messgeräts und dem sogenannten Video-Assist (oder Sucher) hin- und herschauen muss.

Andererseits ergeben sich folgende Nachteile, wenn das Bild der Filmkamera 1 zum Tracken (automatisches Verfolgen) eines Bildbereiches herangezogen würde:
- Filmobjektive verfügen über einen kleinen Schärfetiefebereich. Sie bilden erwünschte Bereiche im Bild auch sehr unscharf ab. Sind Bildbereiche aber unscharf abgebildet, so kann in diesen Bereichen nicht getrackt werden, weil Objekte im Videobild nicht erkannt und analysiert werden können. Möchte die Fokusebene von einem Bereich A zu einem Bereich B verschoben werden, so ist dies ev. nicht möglich, da der Bereich B nicht erkannt wird.
- Oft sind die Bilder einer Filmkamera 1 so belichtet, dass nur bestimmte Motive ausgeleuchtet dargestellt werden, andere Bildbereiche werden im Dunkeln gehalten und sind im Realbild schlecht oder gar nicht zu sehen.

Aufgrund dieses Nachteils eignet sich das Bild der Filmkamera nicht für einen Tracking Algorithmus. Das Bild einer Filmkamera kann also nicht zum Videotracken herangezogen werden.

Aufgabe der vorliegenden Erfindung ist es, diese Nachteile zu vermeiden und ein Verfahren anzugeben, mit dem die Fokussierung einer Filmkamera verbessert werden kann**.**

Erfindungsgemäß wird diese Aufgabe gemäß des Verfahrens und einer Vorrichtung gemäß der unabhängigen Ansprüche gelöst.

Dadurch ist es möglich, dass im Sucher, Video-Assist oder einem anderen Monitor für einen Kameramann oder Fokus-Assistenten das Realbild der Filmkamera zu sehen ist. In diesem Bild kann ein Video-Tracking Algorithmus ablaufen, welcher beliebige Motive trackt und verfolgt. Jedem Bildbereich dieses Realbildes soll ein Entfernungswert hinterlegt sein. Bildbereiche sollen ausgewählt oder automatisch verfolgt werden können, auf welche durch die Entfernungswerte der Fokus der Filmkamera gesteuert wird.

Wesentlich am erfindungsgemäßen Verfahren ist, dass das Realbild des Messgeräts hochauflösend ist und eine große Tiefenschärfe aufweist. Damit ist es möglich, einen Abgleich mit dem Bild der Filmkamera herzustellen und eine Zuordnung der Bildelemente zu schaffen, so dass den einzelnen Pixeln des einen Bilds entsprechende Pixel des anderen Bilds zugeordnet sind. Dadurch kann die unvermeidliche Parallaxe ausgeglichen werden, die aufgrund der unterschiedlichen Position der Filmkamera und des Messgerätes resultiert. Letztlich handelt es sich dabei um eine Bildtransformation, bei der aus dem Realbild des Messgeräts das Bild der Filmkamera rekonstruiert werden könnte, wenn es nicht vorläge. Ausgeschlossen von dieser Transformation sind lediglich Pixel, die in einem Bild durch ein davor befindliches Objekt abgedeckt sind. Bei nicht allzu großem Abstand zwischen Filmkamera und Messgerät ist der Anteil solcher Pixel jedoch relativ gering. Da das Realbild des Messgeräts zuvor mit Entfernungsinformationen aus dem Tiefenbild angereichert ist, können diese Tiefeninformationen somit auch in das Bild der Filmkamera übertragen werden.

Wesentlich an der vorliegenden Erfindung ist, dass mit der Transformation eine perspektivengenaue Übereinstimmung der Ansicht der Filmkamera mit der Ansicht des Messgeräts besteht und somit jedem (oder zumindest hinreichend vielen) Pixeln des Realbilds der Filmkamera eine Tiefeninformation zugordnet ist. Durch dieses Verfahren erhält man ein Tiefenbild der Filmkamera.

Damit sind besonders effiziente Verfahren zur automatischen Fokussierung möglich, es werden aber auch bisher nicht in dieser Weise verfügbare Darstellungen ermöglicht, mit denen eine manuelle oder halbautomatische Fokussierung wesentlich erleichtert werden kann.

Es ist besonders bevorzugt, dass das Realbild des Messgeräts eine große Tiefenschärfe aufweist, die vorzugsweise den gesamten für die Aufnahme zu erwartenden Entfernungsbereich abdeckt. Auf diese Weise kann eine Fokussierung auch dann effizient vorgenommen werden, wenn sich der Fokus der Filmkamera im betreffenden Moment deutlich von der Entfernung des Objekts unterscheidet, auf das letztlich scharf gestellt werden soll. Dies gilt auch dann, wenn die Blende der Filmkamera vollständig geöffnet ist und dementsprechend die Tiefenschärfe gering ist.

Eine besonders vorteilhafte Unterstützung des Anwenders wird dann ermöglicht, wenn an einer ersten Anzeigevorrichtung das Realbild des Messgeräts angezeigt wird, in das Entfernungsinformationen eingeblendet sind. Dabei wird die Eigenschaft des Realbilds ausgenutzt, dass typischerweise der gesamte Bildbereich scharf darstellbar ist. Eine solche Anzeige wird jedoch im Allgemeinen nur zusätzlich zu der des Bilds der Filmkamera erfolgen, da es in der Regel erwünscht ist, genau das zu sehen, was die Filmkamera aufzeichnet, einschließlich der Unschärfe von Objekten außerhalb des Tiefenschärfebereichs.

Alternativ oder zusätzlich dazu ist es möglich, dass an einer weiteren Anzeigevorrichtung das Bild der Filmkamera angezeigt wird, in das Entfernungsinformationen eingeblendet sind. Auf diese Weise wird immer exakt der jeweilige Ausschnitt ohne jegliche parallaktische Verzerrung dargestellt.

Die Anzeige kann allerdings auch durch Einblendung (Overlay) erfolgen, was in sinnvoller Weise durch die lagerichtige, perspektivgenaue Zuordnung sinnvoll möglich ist.

Gemäß einer besonders bevorzugten Ausführungsvariante der vorliegenden Erfindung ist vorgesehen, dass die Entfernungsinformationen auf die Fokuseinstellung der Filmkamera bezogen sind. Dies bedeutet, dass beispielsweise Objekte vor der Fokusebene in einer Farbe und Objekte hinter der Fokusebene in einer anderen Farbe hinterlegt sind wobei sich die Farbintensität und/oder Schattierung je nach Entfernung von der Fokusebene unterschiedlich darstellen kann.

Eine automatische Fokussierung kann insbesondere dadurch besonders günstigerweise realisiert werden, dass im Realbild der Filmkamera Objekte nachverfolgt werden. Die Nachverfolgung von Objekten außerhalb der Tiefenschärfebereichs ist aufgrund der Unschärfe normalerweise erheblich erschwert oder unmöglich. Aufgrund der perspektivischen Übereinstimmung zwischen dem Bild der Filmkamera und Realbild des Messgeräts kann die Nachverfolgung auch im unscharfen Bereich problemlos erfolgen, da die Bilderkennungsverfahren o.dgl. am Realbild des Messgeräts durchgeführt werden und danach die Ergebnisse in das Bild der Filmkamera übertragen werden.

In bevorzugter Weise erfolgt die Bildtransformation durch Algorithmen der Bilderkennung und Merkmalserkennung mit Translation, Rotation, Entzerrung und Skalierung der Ansichten. Der Vorteil davon ist, dass keine Kalibrierung bei Konfigurationsänderungen erforderlich ist.

Alternativ dazu kann vorgesehen sein, dass die Bildtransformation durch Vorgabe der geometrischen und optischen Parameter der Filmkamera und des Messgeräts und Anordnung zueinander erfolgt. Damit kann die erforderliche Rechenleistung verringert werden.

Eine besonders begünstigte Ausführungsvariante der Erfindung sieht vor, dass aufgrund der Tiefeninformation Bereiche des Bilds der Filmkamera zu Elementen von Gruppen zusammengefasst werden, die jeweils separat auswählbar sind. Durch die dreidimensionale Erfassung können die zu bestimmten realen Objekten, wie beispielsweise, einer Person gehörigen Bildpunkte besonders effizient gruppiert werden.

Die Bildung von Gruppen ist nicht nur wegen der Tiefeninformation möglich, sondern auch wegen des Realbildes, z.B. eine Gruppe "Augen" (als Elemente der Gruppen).

Durch die Realbild- und Tiefendaten des Messgeräts können Bildbereiche in Gruppen eingeteilt und im Bild gekennzeichnet werden. Diese Gruppen oder Elemente der Gruppen werden perspektivengenau als Overlay im Bild der Filmkamera eingerechnet und dargestellt. Ein Bediengerät kann eine Gruppe auswählen oder zwischen Gruppen wechseln. Ein Trackingalgorithmus kann auf Grund dieser Auswahl gestartet werden. Durch die hinterlegten Tiefendaten sind die Distanzen der Gruppenelemente zur Filmkamera bekannt, worauf der Fokus eingestellt werden kann.

Zusätzlich können die im Messgerät ermittelten Markierungen, Kennzeichnungen und Entfernungsinformationen perspektivengenau in das Bild der Filmkamera als Layer eingerechnet und eingeblendet werden.

Eine effiziente Verarbeitung der Daten kann dadurch erreicht werden, dass Bilddaten und Tiefendaten der Filmkamera mit einem Timecode-Signal verknüpft und gemeinsam abgespeichert werden.

Die vorliegende Erfindung betrifft auch eine Vorrichtung zur Fokuseinstellung einer Filmkamera, wobei ein Messgerät im Bereich der Filmkamera angeordnet ist, um Entfernungsinformationen zu gewinnen, die zur Fokuseinstellung der Filmkamera verwendbar sind.

Erfindungsgemäß ist diese Vorrichtung dadurch gekennzeichnet, dass das Messgerät aus einer Realbildkamera und einer Tiefenkamera besteht, die auf einem gemeinsamen Träger fest angeordnet sind.

Eine besondere Variabilität und Flexibilität kann dadurch erreicht werden, dass der Träger lösbar an der Filmkamera befestigt ist. Aufgrund der Möglichkeit, die Übereinstimmung zwischen dem Realbild des Messgerätes und dem Bild der Filmkamera durch Bilderkennungsverfahren herbeizuführen, ist es dabei nicht von essenzieller Bedeutung, die Position des Trägers in Bezug auf die Filmkamera genau zu justieren und bei jeglicher Änderung beispielsweise der Optik neuerlich zu überprüfen.

Im Messgerät oder als eigens Gerät befindet sich eine Recheneinheit, welche das mit den Tiefeninformationen angereichertes Realbild des Messgeräts (7) herstellt. Diese Recheneinheit besitzt die Möglichkeit, Algorithmen der Bildverarbeitung ablaufen zu lassen.

Die erfindungsgemäße Vorrichtung kann auch vorsehen, dass Markierungen und die korrespondierenden Entfernungswerte von einem Bediengerät ausgewählt werden können und am Bediengerät weiterverarbeitet werden.

Um eine möglichst große Tiefenschärfe und gleichmässige Ausleuchtung des Realbilds zu erreichen ist bevorzugt vorgesehen, dass die Realbildkamera einen Bildsensor mit HDR Funktion (High Dynamic Range Image) aufweist. Dabei wird durch bekannte Verfahren ein Ausgleich großer Helligkeitsunterschiede durchgeführt. Wichtig ist für die erfindungsgemäße Verarbeitung, dass der Schärfentiefenbereich beim Realbild des Messgeräts hinreichend groß ist. Vorteilhaft ist, wenn der Realbildsensor eine HDR Funktion hat, um das Realbild des Messgeräts halbwegs gleichmäßig ausgeleuchtet abzubilden, um keine Informationen zu verlieren.

Es kann auch vorgesehen sein, dass die Realbildkamera einen kleinen Sensor und/oder kleine Blendenöffnung aufweist. Die Wahl der Blendenöffnung und die Fokuseinstellung werden dabei in optimaler Weise so gewählt, dass der gesamte interessierende Bereich scharf abgebildet werden kann. Bei Filmaufnahmen kann dies beispielsweise ein Bereich vor der Kamera zwischen 40 cm und INF sein.

Es ist eine Video-Overlay-Einheit vorgesehen, um das Realbild des Messgeräts in das Bild der Filmkamera einzurechnen. Die Video-Overlay-Einheit besitzt dabei einen Eingang für die Daten vom Messgerät, der Bediengeräte und der Filmkamera. Die Daten können an der Anzeigevorrichtung ausgegeben werden. Die Video-Overlay-Einheit ist im Messgerät, in der Filmkamera oder in der Anzeigevorrichtung eingebaut oder als eigens Gerät bei der Filmkamera montiert.

Vorzugsweise kann vorgesehen sein, dass das Messgerät an einer Streulichtblende der Filmkamera angeordnet ist. Eine Streulichtblende ist dabei eine Einrichtung, die in der Regel an dem Objektiv der Filmkamera angeordnet ist. Sie dient dazu, den Einfall von Streulicht in das Objektiv wie Sonnenlicht oder Licht aus Lichtquellen schräg hinter oder neben der Kamera zu vermindern oder zu vermeiden. Solche Streulichtblenden, teilweise auch als Kompendium oder Matte Box bezeichnet, weisen oft einstellbare Klappen (French Flags) auf.

Das Messgerät kann somit sehr nahe an der Filmkamera angeordnet werden, wo es nicht stört und eine kompakte Einheit mit dieser bildet. Somit wird eine platzsparende Ausführungsform mit einfachem Aufbau ermöglicht. Dabei kann das Messgerät in der Streulichtblende integriert sein. Besonders vorzugsweise weist die Streulichtblende einen viereckigen Außenrahmen auf, wobei das Messgerät im Bereich zumindest eines Ecks des Außenrahmens angeordnet ist. Der Außenrahmen ist entlang der Achse des Objektivs der Filmkamera am dem der Filmkamera abgewandten Ende der Streulichtblende angeordnet.

In der Folge wird die vorliegende Erfindung anhand der in den Figuren dargestellten Ausführungsbeispiele näher erläutert. Es zeigen:
- Fig. 1: eine schematische Darstellung der erfindungsgemäßen Vorrichtung;
- Fig. 2: ein Diagramm, das die Konfiguration der Vorrichtung erklärt.

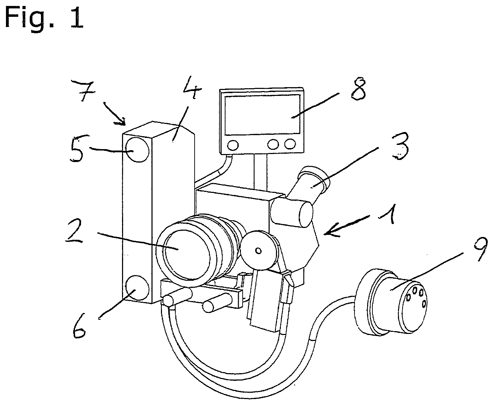

Die Vorrichtung von Fig. 1 besteht aus einer Filmkamera 1 mit einem Objektiv 2 und einem Sucher 3. An der Filmkamera 1 ist ein Träger 4 lösbar befestigt, der eine Realbildkamera 5 und eine Tiefenkamera 6 trägt. Diese sind in Gebrauchslage senkrecht übereinander angeordnet. Als Gebrauchslage wird die übliche Position der Filmkamera 1 bezeichnet, bei der die lange Seite des rechteckigen Bilds waagrecht ist. Somit ist die Verbindungslinie zwischen der Realbildkamera 5 und der Tiefenkamera 6 senkrecht auf die lange Seite des rechteckigen Bilds und damit des Sensors der Filmkamera 1.

Der Träger 4 einschließlich der Realbildkamera 5 und der Tiefenkamera 6 ist ein Messgerät 7, das es ermöglicht, Bildinformation mit Entfernungsinformation anzureichern. Dabei wird jedem Pixel (oder hinreichend vielen Pixeln) des Realbilds eine Entfernungsinformation zugewiesen.

Ein Touch-PC 8 als Anzeigeeinrichtung ermöglicht die Anzeige verschiedener Darstellungen, die eine automatische oder insbesondere manuelle Fokussteuerung erleichtern. Ein weiteres Bediengerät 9 mit einem Drehregler kann ebenfalls zur Steuerung verwendet werden.

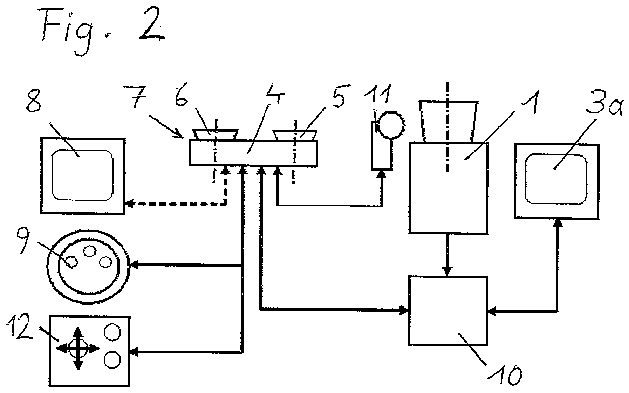

Fig. 2 zeigt die logische Verschaltung der einzelnen Komponenten. Die Filmkamera 1 steht mit einer Video Overlay Einheit 10 in Verbindung, um das Bild an diese zu übermitteln. Die Video Overlay Einheit 10 erhält auch vom Messgerät 7 Bild- und Entfernungsinformationen, um so das Bild der Filmkamera 1 lagerichtig mit dem Realbild von der Realbildkamera 5 und dem Tiefenbild von der Tiefenkamera 6 des Messgeräts 7 in Übereinstimmung bringen zu können.

Gleichzeitig kann über das Messgerät 7 ein Servomotor 11 an der Filmkamera 1 angesteuert werden, um die Fokuseinstellung zu steuern.

Mit 8, 9 und 12 sind verschiedene Bediengeräte bezeichnet, nämlich ein Touch-PC 8, ein weiteres Bediengerät 9 mit einem Drehregler und ein Bediengerät 12 mit einem Joystick.

Der Sucher 3 kann wahlweise mit den gewünschten Darstellungen versorgt werden. Alternativ oder zusätzlich zum Sucher 3 kann ein Bildschirm als Video-Assist 3a vorgesehen sein.

In der Folge werden stichwortartig typische Eigenschaften und Merkmale der einzelnen Komponenten erklärt.

### Messgerät 7:

Es erzeugt mit einem 3DSensor, der hier allgemein auch als Tiefenkamera 6 bezeichnet wird, eine Matrix von Entfernungswerten. Der 3D Sensor besteht aus einer stereoskopen Kameraanordnung, TOF Kamera, Laserscanner, Lidar Sensor, Radarsensor oder Kombination verschiedener 3D Sensoren zur Verbesserung der Messqualität, des Messbereichs und der Auflösung.

Das Messgerät 7 hat eine Videokamera, welche ein Realbild erzeugt und die hier daher Realbildkamera 5 bezeichnet wird. Der 3D Sensor und die Realbildkamera 5 sind zueinander mechanisch fixiert und kalibriert. Die Darstellungsperspektiven sind gleich. Somit kann jedem erkennbaren Bildpunkt der Videokamera ein Entfernungswert zugeordnet werden. Diese Zuordnung nennt man Tiefenbild. Vorzugsweise hat diese Realbildkamera 5 einen unendlich großen Schärfentiefenbereich, um alle Objekte im Bild scharf abbilden zu können. Vorzugsweise hat diese Videokamera einen großen Belichtungsumfang (z.B. durch einen HDR-Modus), um unterschiedlich helle Motive gleichmäßig abbilden zu können.

Das Messgerät 7 besteht aus der Tiefenkamera 6 (3D Sensor) und der Realbildkamera 5 als Messeinheit und einer Recheneinheit zur Aufbereitung der Messergebnisse. Vorzugsweise sind Messeinheit und Recheneinheit im gleichen Gehäuse. Sie können aber auch als getrennte Einheiten existieren.

Das Messgerät 7 ist an einer Film- oder Fernsehkamera (hier Filmkamera 1) so angeordnet, dass es mit dem Bild der Filmkamera 1 in Übereinstimmung gebracht werden kann und zwar, dass das Bild der Filmkamera 1 in einem Teilbereich der Realbildkamera 5 enthalten ist.

Der Sichtbereich des Messgeräts 7 ist sehr weitwinkelig und üblicherweise größer als der Sichtbereich der Filmkamera 1.

Das Messgerät 7 ist lösbar an oder bei der Filmkamera 1 angeordnet.

Vorzugsweise sind die optischen Achsen der Realbildkamera 5 des Messgeräts 7 und der Filmkamera 1 parallel.

Im Messgerät ist vorzugsweise eine Steuergerät implementiert und/oder eine Schnittstelle für den Fokusmotor oder aller drei Objektivmotore (Fokus, Iris, Zoom) der Filmkamera 1 vorgesehen.

Im Messgerät 7 kann sich eine IMU (Intertial Measurement Unit) befinden, welche zum Berechnen der räumlichen Position des Messgeräts 7 genutzt wird.

Im Messgerät 7 werden durch Analysen von Videobildern Tracking Algorithmen zum automatisierten Verfolgen von Objekten im Videobild ausgeführt. Auch kann der naheste Punkt zur Filmkamera 1 berechnet werden.

Im Messgerät 7 können mit Hilfe der vorliegenden Realbild- und Tiefendaten Bildbereiche in Gruppen unterteilt werden.

Durch die vorhandenen Realbildinformationen können durch Algorithmen der Bilderkennung Merkmale aus Bildern extrahiert werden. Solche Merkmale können Augen, Gesichter von Menschen, gesamte Personen oder verschiedenste vordefinierte Gegenstände sein. So können beispielsweise alle Gesichter in Elemente der Gruppe "Gesicht" unterteilt und mit einem Rahmen im Realbild markiert werden.

Durch die vorhandenen Tiefeninformationen können zusammenhängende Bildbereiche abhängig vom Abstand in Elemente einer Gruppen definiert und farblich gekennzeichnet werden. Bereiche von beispielsweise 1 - 2 m werden rot dargestellt, Bereiche von 2 - 3 m blau, usw.

Durch die vorhandenen Tiefeninformationen können zusammenhängende Bildbereiche mit regelmäßigen Tiefenverlauf ein Element einer Gruppe bilden. So weist beispielsweise ein Fußboden einen regelmäßigen Tiefenverlauf auf, solange er hinreichend eben ist und keine Gegenstände am Boden liegen. Es kann im Bild daher das Gruppenelement "Fussboden" gebildet werden und als einziges Bildobjekt zusammengefasst und im Realbild markiert werden.

### Video Overlay Einheit 10:

Die Video Overlay Einheit 10 besitzt Schnittstelleneingang und -ausgang für das Videobild der Filmkamera 1. Damit kann ein Videobild eingelesen und wieder ausgegeben werden.

Die Video Overlay Einheit 10 besitzt einen Schnittstelleneingang für das Realbild und das Tiefenbild des Messgeräts 7.

Das Realbild des Messgeräts 7 wird durch Transformation in die Perspektive des Bildes der Filmkamera 1 eingerechnet. Die Transformation kann durch folgende Arten erfolgen:
- Automatisch durch Bilderkennung/Merkmalserkennung. Basis dieser Transformation ist eine Merkmalserkennung (Feature Detection), wobei in beiden Bildern Übereinstimmungen gesucht werden. Die Transformation des Bildes des Messgeräts in das Bild der Filmkamera erfolgt durch:
   ▪ Translation,
   ▪ Rotation,
   ▪ Entzerrung, und
   ▪ Skalierung
   der beiden Videobilder anhand von Bildmerkmalen, welchen in beiden Bildern gefunden werden. Theoretisch reichen drei gleiche Bildmerkmale, verzugsweise handelt es sich um mehrere über das Bild verteilte Merkmale, welche in beiden Bildern detektiert werden. Diese Art der Transformation hat den Vorteil, dass bei einem Objektivwechsel der Filmkamera ohne manueller Interaktion die Bildperspektiven automatisch abgeglichen werden.
- Halbautomatisch durch Eingabe der geometrischen und optischen Parameter.

Die Bildtransformation zwischen dem Realbild der Filmkamera und den Bildern des Messgeräts kann auch durch eine rein mathematische Verschiebung erfolgen, wenn
▪ die Abstände und
▪ die Ausrichtung der optischen Mitte,
▪ die Abstände der Bildsensoren, und
▪ die Bildausschnitte der Optik
eingegeben werden. Eine einfache Bildtransformation und damit eine nicht korrekte Übereinstimmung der Perspektive erreicht man auch mit nur zwei oder drei der angeführten Parameter.
- Manuell durch Ineinanderschieben der Darstellungen des Realbildes der Filmkamera mit dem Realbild oder Tiefenbild des Messgeräts auf einem Monitor.

Die Transformation kann auch daraus berechnet werden, wenn die beiden Realbilder grafisch dargestellt werden und durch manuelle grafische Manipulationen auf dem Bildschirm (verschieben, verdrehen, kippen, skalieren) übereinander geschoben werden.

Da eine direkte Korrelation zwischen Tiefenbild und Realbild des Messgeräts 7 besteht, ist mit dieser Transformation der Realbilder auch ein Zusammenhang zwischen den Pixeln des Bilds der Filmkamera 1 und deren Entfernung hergestellt. Somit ist ein Tiefenbild vom Bild der Filmkamera 1 realisiert.

Das Bild der Filmkamera 1, das Realbild des Messgeräts 7 und das Tiefenbild des Messgeräts 7 können als Overlay gemeinsam dargestellt werden, oder es werden nur einzelne Ebenen des Overlays dargestellt.

Über das Bild der Filmkamera 1 können zusätzliche Informationen als weitere Overlay-Ebene gelegt werden.

Markierungen, gekennzeichnete Bildbereiche und die Position der Trackingpunkte bzw. Trackingbereiche, Cursor, etc. werden durch die Transformation ebenfalls perspektivengenau als Overlay in das Videobild der Hauptkamera eingerechnet, sind damit darstellbar und kontrollierbar. Auch wenn das Bild der Filmkamera 1 unscharf oder zu dunkel abbildet, können diese Markierungen, Kennzeichnungen und Trackingfunktionen korrekt ablaufen, da sie im Hintergrund über das Realbild des Messgeräts berechnet werden.

Gruppen oder Elemente einer Gruppe und die Kennzeichnung (Markierung) dieser können durch die Bildtransformation perspektivengenau in das Realbild der Filmkamera eingerechnet werden.

Diese Bildgruppen werden im Realbild farblich, durch Schattierungen, als Muster markiert oder einem Rahmen eingefasst als Overlay angezeigt.

Durch Einfärben der Pixel kann ein farbliches Overlay über das Bild der Filmkamera gelegt werden. Das Bild der Filmkamera 1 wird in solchen Darstellungen idealerweise als Graustufenbild ausgeführt.

Jeder Abstand eines Pixels oder Bildbereichs bekommt eine eigene Farbcodierung. Damit ist eine Tiefeninformation für das Bild der Filmkamera 1 gegeben.

Der Schärfentiefenbereich wird als Overlay in das Videobild der Filmkamera 1 eingerechnet und ist darstellbar. Dabei werden jene Pixel/Bildpunkte der Filmkamera 1 farbig markiert, welche im Schärfebereich liegen. Das entspricht einer herkömmlichen Fokus Peaking Funktion für Videokameras.

Jedem Pixel oder Bildbereich des Bild der Filmkamera 1 kann in Abhängigkeit zum Abstand zur Fokusebene eine eigene Farbdarstellung gegeben werden. Diese Farbmarkierung kann als Overlay eingeblendet werden. Es ist damit auf einem Blick ersichtlich, welche Bereiche in der Fokusebene liegen, und welchen Abstand Bildbereiche zur Fokusebene haben. Diese Funktion wird als Visual Fokus Peaking bezeichnet. Angelehnt an die Fokus Peaking Funktion bei traditionellen Videokameras oder Fotoapparate, wo nur die Pixel markiert werden, welche in der Fokusebene liegen. Im Gegensatz dazu wird hier zusätzlich auch der Abstand aller anderen Pixel farblich darstellbar.

Der Abstand eines Bildbereichs ist auch in verschiedenen Schnittlinien darstellbar. Dabei wird eine horizontale oder vertikale Linie in das Videobild gelegt. Je nach Abstand des entsprechenden Pixels auf dieser Schnittlinie wird mit einem Balken dargestellt, und zwar wieweit der entsprechende Pixel von der Fokusebene entfernt ist. Pixel vor der Fokusebene werden mit einem Balken über der Schnittlinie, Pixel hinter der Fokusebene werden mit einem Balken unterhalb der Schnittlinie gezeichnet. Es entsteht ein Histogramm, welches den Abstand der Pixel von der Fokusebene anzeigt.

Das Videobild der Filmkamera 1 kann durch die Verknüpfung mit den Tiefeninformationen in der Darstellungsperspektive gekippt werden. In dieser Darstellung kann die Fokusebene eingeblendet werden und es ist einfach ersichtlich, wie die Bildbereiche räumlich zur Fokusebene stehen.

Allgemeine Einstellungen und Informationen des Messgeräts werden als Overlay in das Videobild der Filmkamera 1 eingerechnet und sind darstellbar.

Das somit bearbeitete und erweiterte Bild der Filmkamera 1 wird auf einem Video Assist Monitor 3a oder im Videosucher 3 der Filmkamera 1 dargestellt.

Das somit bearbeitete Bild der Filmkamera, Realbild des Messgerätes 7 und das Tiefenbild können auch an einem TouchPC ausgegeben werden, auf welchem manuell oder automatisch Bildbereiche ausgewählt, gespeichert und abgerufen werden.

Das somit bearbeitete Bild der Filmkamera 1 kann mit einem Time Code Signal verknüpft und abgespeichert werden. Es liegen somit zu jedem definierten Zeitpunkt das Realbild und die Tiefeninformationen der Filmkamera 1 vor.

Diese Video Overlay Einheit befindet sich vorzugsweise im Messgerät 7 oder im Video Assist 3a und ist Teil dessen.

### Video Assist 3a und/oder Sucher 3:

Der Video Assist 3a oder der Sucher 3 sind Anzeigeelemente für das Bild der Filmkamera 1.

Video Assist 3a oder Sucher 3 kann einen Touchscreen und/oder Bedienknöpfe aufweisen, auf welchem direkt das Messgerät 7 gesteuert werden kann. So kann auch ein Bildbereich ausgewählt werden, auf dem fokussiert wird.

### Bediengerät 9, 12:

Das Bediengerät 9, 12 besitzt ein Kontrollelement zum Einstellen des Fokus. Ein Verdrehen/Verschieben bewirkt eine Verschiebung der Fokusebene im Raum.

Das Bediengerät 9, 12 besitzt ein Kontrollelement zum Verstellen einer Fokusrampe.

Diese beiden Kontrollmöglichkeiten können ein Element oder zwei Elemente sein.

Das Kontrollelement, vorzugsweise ein haptischen Bedienelement (z.B. Slider, Drehknopf) verfügt über einen Verstellweg und zwei Anschläge. Die zwei Anschläge sind als Anfangswert und Endwert bezeichnet.

Dem Kontrollelement können Fokusebenen (Entfernungen) zugewiesen werden. So wird dem Anfangswert die Fokusebene A und dem Endwert die Fokusebene E zugewiesen.

Fokusebene A und Fokusebene E können Entfernungen, Trackingbereiche, Bildbereiche etc. sein

Verschiedene Fokusebenen (A1, A2, A3,..., E1, E2, ...) können dem Anfangswert oder Endwert des Kontrollelements zugeordnet werden. Dies kann über Knopfdruck oder anderer Bedienung geschehen.

Der Anfangswert und der Endwert sind also keine fixen Entfernungswerte, sondern variable Entfernungsebenen im Raum. So können Ebene A & E aus dem Trackingalgorithmus abgeleitet sein.

So kann beispielsweise auch Ebene A der eingestellte Wert vom manuellen Kontrollelement sein, Ebene E kann aus dem Trackingalgorithmus abgeleitet sein.

Das Bediengerät besitzt Schalter oder Knöpfe zum Umschalten zwischen einem automatischen Fokussierbetrieb und einem manuellen Fokussieren.

Im automatischen Betrieb ist dem Anfangswert eine Fokusebene A und dem Endwert ist eine Fokusebene B zugewiesen. Eine Verschiebung/Verdrehung des Kontrollelements bewirkt eine Verschiebung der Fokusebene. Durch die Geschwindigkeit des Drehens/Schiebens wird die Zeit festgelegt, wie schnell der Fokus von Anfangswert zu Endwert, also von Ebene A zur Ebene E wandern soll. Es wird durch das Kontrollelement also nicht die Entfernung manuell verändert, sondern eine Zeit gesteuert, wie der Fokus im Raum wandern soll (= Steuerung einer Fokusrampe).

Bei bekannten Reglern stehen bei Kontrollelementen (meistens einem Drehknopf zum Verstellen der Fokusebene) am Anfangswert und Endwert des Drehweges zwei fixe Entfernungen. So kann beispielsweise der Fokus von 1 m bis 10 m im Raum verschoben werden. Im Gegensatz dazu werden hier dem Anfangswert und Endwert variable Fokusebenen zugewiesen. Diese variablen Ebenen können beispielsweise zwei Trackingpunkte von zwei unterschiedlichen Motiven sein. Die Motive können sich natürlich im Raum bewegen, ändern daher immer den Abstand zur Kamera. Damit zieht der Operator eigentlich nicht mehr den Fokus in der Entfernung, sondern er steuert nur mehr den Zeitverlauf, wie lange und wann der Fokus beim neuen Endpunkt sein soll. Er ist dadurch von der schwierigen Aufgabe entlastet, permanent die richtige Entfernung zum Endmotiv zu "wissen" (schätzen). Er kann sich ausschließlich dem zeitlichen Verlauf der Fokusrampe widmen, welches zu künstlerisch interessanteren Ergebnissen führt.

Im manuellen Betrieb sind die Fokusebenen fixe Werte. Dem Verstellweg entspricht eine korrespondierende Distanz. Eine Verdrehung/Verschiebung bewirkt eine Verschiebung der Fokusebene im Raum.

Das Bediengerät besitzt Bedienelemente oder Schalter zum Setzen, Abrufen und Löschen von Trackingpunkten oder Markierungen bzw. zum Verschieben eines Cursors am Videobild.

Bedienelemente oder Schalter und Kontrollelement können in einem Gerät oder in mehreren Geräten verteilt sein.

Kontrollelement kann anstatt als Drehknopf auch als Schieberegler, Joystick, Sensorfläche, Touchscreen oder anderer Aktuator ausgeformt sein

Das Bedienelement kann zum Positionieren eines Cursors im Videobild verwendet werden. Dieses Bedienelement kann ein Schalter, Joystick, Touchpad, Augentracking des Users, Gyroskop oder anderes Element zum Steuern von x/y Koordinaten sein.

Wird der Cursor über das Realbild der Filmkamera bewegt, so kann der korrespondierende Entfernungswert ausgegeben oder die Fokusposition an der Optik angefahren werden.

Das Bediengerät ist über Kabel oder Funkverbindung direkt mit Messgerät verbunden

Das Bediengerät kann auch mit einem Lens Control System verbunden sein, welches wiederum eine Verbindung zum Messgerät 7aufweist.

Das Bediengerät kann zusätzlich die Iris und/oder den Zoom der Filmkamera 1 steuern.

Der Drehknopf hat einen motorischen Antrieb. Damit ist es möglich den Drehknopf automatisch auf die korrespondierende Entfernungsposition des Messgeräts zu drehen. Der Drehknopf hat also immer die Position, welchen dem aktuellen Entfernungswert des Messgeräts entspricht.

Mit dem Bedienelement lassen sich auf unterschiedlicher Weise Motive oder Bildgruppen aus dem Videobild/Tiefenbild auswählen:
Mit dem Cursor werden Trackingpunkte auf dem Video Assist 3a angefahren und auf Knopfdruck gesetzt. Die Entfernungsmessung kann danach automatisch ablaufen.

Es wird die Entfernung zu einem bestimmten Objekt gemessen. Vorzugsweise befindet sich dieses Objekt in der optischen Mitte der Hauptkamera. Auf Knopfdruck am Bediengerät wird diese Entfernung gespeichert und ein Trackingpunkt gestartet. Durch den gesetzten Trackingpunkt kann das Objekt anschließend durch Bilderkennung am Realbild automatisch verfolgt und fokussiert werden. Der Operator braucht damit nicht auf einen Monitor zu schauen, um einen Trackingpunkt zu setzen und eine automatische Fokussierung zu speichern oder zu starten.

Über das Bediengerät kann eine Bildmerkmalserkennung gestartet werden. Diese Bildmerkmale sind beispielsweise Augen, Gesicht- oder Personen. Diese Merkmale werden im Videobild der Hauptkamera als Overlay eingeblendet. Durch Umschalten kann ein Merkmal angewählt und als Trackingpunkt abgespeichert oder ein Tracking gestartet werden. Durch die zum Bild der Filmkamera perspektivisch korrekten Tiefendaten kann in das Bild der Filmkamera der Bereich der Schärfeebene (Depth of Field, DoF) farblich, oder durch Muster dargestellt, als Overlay eingeblendet werden. Es werden nur jene Pixel gekennzeichnet, welche im DoF sind; die anderen Pixel bleiben in der Realdarstellung erhalten.

Über das Bediengerät kann eine Bildmerkmalserkennung gestartet werden. Diese Bildmerkmale sind beispielsweise Augen, Gesicht- oder Personen. Durch Verdrehen des Drehknopfs werden die Merkmale, welche mit der entsprechenden Entfernung korrespondieren markiert. Dieses Merkmal ist somit ausgewählt und kann als Trackingpunkt abgespeichert werden.

Durch Verdrehen des Drehknopfs werden die korrespondierenden Entfernungen im Videobild farblich markiert. Ist nur ein Bildbereich im Videobild markiert, kann dieser als Trackingpunkt abgespeichert werden. Sind mehrere Bildbereiche im Videobild markiert, wird durch Umschalten ein Bereich angewählt und als Trackingpunkt abgespeichert.

Über das Bediengerät können die Elemente einer Gruppe ausgewählt werden. So können alle Elemente der Reihe nach markiert werden. Wird ein Element auf Knopfdruck ausgewählt, so kann der korrespondierende Entfernungswert ausgegeben oder die Fokusposition ermittelt werden. Auch ist es möglich, dieses Element als Trackingpunkt abzuspeichern oder das Tracking anhand dieses Elements zu starten.

Besonders günstig ist es, wenn der Abstand einer ersten Gruppe von einer Fokusebene einem ersten Anschlag eines Bediengeräts zugeordnet wird und dass ein weiterer Abstand einer weiteren Gruppe von der Fokusebene einem weiteren Anschlag des Bediengeräts zugeordnet wird. Dabei wird der Verstellbereich des Bediengeräts dynamisch an die Entfernung der beiden Gruppen angepasst, so dass die Fokusebene stufenlos zwischen den Gruppen eingestellt werden kann. Es ist aber auch möglich, nur einen Anschlag mit der Entfernung einer Gruppe zu verknüpfen.

## Patentansprüche

1. Verfahren zur Fokuseinstellung einer Filmkamera (1), bei dem mit einem Messgerät, das in Bereich der Filmkamera (1) angeordnet ist, Entfernungsinformationen gewonnen werden, die zur Fokuseinstellung der Filmkamera (1) verwendet werden, wobei
- das Messgerät (7) einerseits ein Realbild und andererseits ein Tiefenbild herstellt;
- das Messgerät (7) aus diesem Realbild des Messgeräts und diesem Tiefenbild des Messgeräts ein mit Tiefeninformation angereichertes Realbild herstellt; **dadurch gekennzeichnet, dass**
- dieses mit Tiefeninformation angereicherte Realbild durch eine Bildtransformation in das Bild der Filmkamera (1) eingerechnet wird.

2. Verfahren nach Anspruch 1, **dadurch gekennzeichnet, dass** das Realbild des Messgeräts (7) eine große Tiefenschärfe aufweist, die vorzugsweise den gesamten für die Aufnahme zu erwartenden Entfernungsbereich abdeckt.

3. Verfahren nach einem der Ansprüche 1 oder 2, **dadurch gekennzeichnet, dass** an einer Anzeigevorrichtung das Realbild des Messgeräts (7) angezeigt wird, in das wahlweise Entfernungsinformationen eingeblendet sind.

4. Verfahren nach einem der Ansprüche 1 bis 3, **dadurch gekennzeichnet, dass** an einer Anzeigevorrichtung das Bild der Filmkamera (1) angezeigt wird, in das wahlweise Entfernungsinformationen eingeblendet sind.

5. Verfahren nach den Ansprüchen 3 und 4, **dadurch gekennzeichnet, dass** das Realbild des Messgeräts (7) und das Bild der Filmkamera (1) umschaltbar oder perspektivengenau überlagert anzeigbar sind.

6. Verfahren nach einem der Ansprüche 3 bis 5, **dadurch gekennzeichnet, dass** die Entfernungsinformationen auf die Fokuseinstellung der Filmkamera (1) bezogen sind.

7. Verfahren nach Anspruch 6, **dadurch gekennzeichnet, dass** der Abstand von jedem Pixel oder von zusammenhängenden Bildbereichen zur Fokusebene farblich, oder durch Muster dargestellt, als Overlay eingeblendet wird.

8. Verfahren nach einem der Ansprüche 1 bis 7, **dadurch gekennzeichnet, dass** im Bild der Filmkamera (1) Objekte nachverfolgt werden.

9. Verfahren nach Anspruch 8, **dadurch gekennzeichnet, dass** die Nachverfolgung am Realbild des Messgeräts (7) durchgeführt wird und danach die Ergebnisse in das Bild der Filmkamera (1) übertragen werden.

10. Verfahren nach einem der Ansprüche 1 bis 9, **dadurch gekennzeichnet, dass** die Bildtransformation durch Algorithmen der Bilderkennung und Merkmalserkennung mit Translation, Rotation, Entzerrung und Skalierung der Ansichten erfolgt.

11. Verfahren nach einem der Ansprüche 1 bis 9, **dadurch gekennzeichnet, dass** die Bildtransformation durch Vorgabe der geometrischen und optischen Parameter der Filmkamera (1) und des Messgeräts und Anordnung zueinander erfolgt.

12. Verfahren nach einem der Ansprüche 1 bis 9, **dadurch gekennzeichnet, dass** die Bildtransformation durch manuelles Ineinanderschieben der Darstellung des Bildes der Filmkamera und dem Realbild oder dem Tiefenbild des Messgeräts auf einer Anzeigevorrichtung erfolgt.

13. Verfahren nach einem der Ansprüche 1 bis 12, **dadurch gekennzeichnet, dass** aufgrund der Tiefeninformation zusammenhängende Bereiche des Realbilds zu Elementen von Gruppen zusammengefasst werden, die in das Bild der Filmkamera (1) übertragen werden und die jeweils separat auswählbar sind.

14. Verfahren nach Anspruch 13, **dadurch gekennzeichnet, dass** einzelne Elemente auswählbar sind.

15. Verfahren nach einem der Ansprüche 12 oder 14, **dadurch gekennzeichnet, dass** der Abstand einer ersten Gruppe von einer Fokusebene einem ersten Anschlag eines Bediengeräts zugeordnet wird und dass ein weiterer Abstand einer weiteren Gruppe von der Fokusebene einem weiteren Anschlag des Bediengeräts zugeordnet wird.

16. Verfahren nach einem der Ansprüche 13 bis 15, **dadurch gekennzeichnet, dass** einzelne Elemente oder Gruppen wahlweise nachverfolgt werden können.

17. Verfahren nach einem der Ansprüche 1 bis 16 **dadurch gekennzeichnet, dass** Bilddaten und Tiefendaten der Filmkamera (1) mit einem Timecode-Signal verknüpft und gemeinsam abgespeichert werden.

18. Vorrichtung zur Fokuseinstellung einer Filmkamera (1), bei der ein Messgerät (7) im Bereich der Filmkamera (1) angeordnet ist, um Entfernungsinformationen zu gewinnen, die zur Fokuseinstellung der Filmkamera (1) verwendbar sind, wobei das Messgerät (7) aus einer Realbildkamera (5) und einem 3DSensor (6) besteht, die auf einem gemeinsamen Träger (4) fest angeordnet sind und dass die Vorrichtung eine Recheneinheit aufweist, die dazu eingerichtet ist ein mit Tiefeninformationen angereichertes Realbild herzustellen, **dadurch gekennzeichnet, dass** die Vorrichtung dazu eingerichtet ist, dieses mit Tiefeninformation angereicherte Realbild durch eine Bildtransformation in das Bild der Filmkamera (1) einzurechnen.

19. Vorrichtung nach Anspruch 18, **dadurch gekennzeichnet, dass** der Träger (4) lösbar an der Filmkamera (1) befestigt ist.

20. Vorrichtung nach einem der Ansprüche 18 oder 19, **dadurch gekennzeichnet, dass** die Realbildkamera (5) des Messgeräts (7) einen Bildsensor mit HDR Funktion (High Dynamic Range Image) aufweist.

21. Vorrichtung nach einem der Ansprüche 18 bis 20 **dadurch gekennzeichnet, dass** eine erste Anzeigevorrichtung vorgesehen ist, um das Realbild des Messgeräts (7) anzuzeigen, in das Entfernungsinformationen eingeblendet sind.

22. Vorrichtung nach einem der Ansprüche 18 bis 21, **dadurch gekennzeichnet, dass** eine weitere Anzeigevorrichtung vorgesehen ist, um das Bild der Filmkamera (1) anzuzeigen, in das Entfernungsinformationen eingeblendet sind.

23. Vorrichtung nach einem der Ansprüche 18 bis 22, **dadurch gekennzeichnet, dass** eine Video-Overlay-Einheit vorgesehen ist, um das Realbild des Messgeräts (7) in das Bild der Filmkamera (1) einzurechnen.

24. Vorrichtung nach einem der Ansprüche 18 bis 23, **dadurch gekennzeichnet, dass** das Messgerät (7) an einer Streulichtblende der Filmkamera angeordnet ist.

25. Vorrichtung nach einem der Ansprüche 18 bis 24, **dadurch gekennzeichnet, dass** ein Bedienelement zur Fokuseinstellung vorgesehen ist, das mindestens einen Anschlag aufweist, der der einer Entfernung einer Gruppe von Bildelementen zugeordnet ist.

## Claims

1. Method for setting the focus of a film camera (1), in which a measuring device arranged in the region of the film camera (1) is used to obtain distance information that is used for setting the focus of the film camera (1), wherein
- the measuring device (7) produces on the one hand a real image and on the other hand a depth image;
- the measuring device (7) produces a real image augmented with depth information from this real image of the measuring device and this depth image of the measuring device;
**characterised in that**
- this real image augmented with depth information is calculated into the image of the film camera (1) by means of an image transformation.

2. Method according to claim 1, **characterised in that** the real image of the measuring device (7) has a large depth of field, which preferably covers the entire distance range to be expected for the recording.

3. Method according to one of claims 1 or 2, **characterised in that** the real image of the measuring device (7) is displayed on a display device, in which distance information is optionally superimposed.

4. Method according to one of claims 1 to 3, **characterised in that** the image of the film camera (1), into which distance information is optionally superimposed, is displayed on a display device.

5. Method according to claims 3 and 4, **characterised in that** the real image of the measuring device (7) and the image of the film camera (1) can be displayed in a switchable manner or superimposed with perspective accuracy.

6. Method according to one of claims 3 to 5, **characterised in that** the distance information is related to the focus setting of the film camera (1).

7. Method according to claim 6, **characterised in that** the distance from each pixel or from contiguous image areas to the focal plane is superimposed in color, or represented as patterns, as an overlay.

8. Method according to one of claims 1 to 7, **characterised in that** objects are tracked in the image of the film camera (1).

9. Method according to claim 8, **characterised in that** the tracking is performed on the real image of the measuring device (7) and thereafter the results are transferred to the image of the film camera (1).

10. Method according to one of claims 1 to 9, **characterised in that** the image transformation is carried out by image recognition and feature recognition algorithms with translation, rotation, distortion correction and scaling of the views.

11. Method according to one of claims 1 to 9, **characterised in that** the image transformation is carried out by presetting the geometrical and optical parameters of the film camera (1) and of the measuring device and arranging them relative to one another.

12. Method according to one of claims 1 to 9, **characterised in that** the image transformation is carried out by manually nesting the display of the image of the film camera and the real image or the depth image of the measuring device on a display device.

13. Method according to one of claims 1 to 12, **characterised in that,** on the basis of the depth information, contiguous areas of the real image are combined to form elements of groups which are transferred into the image of the film camera (1) and which can each be selected separately.

14. Method according to claim 13, **characterised in that** individual elements are selectable.

15. Method according to one of claims 12 or 14, **characterised in that** the distance of a first group from a focal plane is assigned to a first stop of a control unit, and **in that** a further distance of a further group from the focal plane is assigned to a further stop of the control unit.

16. Method according to one of claims 13 to 15, **characterised in that** individual elements or groups can optionally be tracked.

17. Method according to one of claims 1 to 16, **characterised in that** image data and depth data of the film camera (1) are linked with a time code signal and stored together.

18. Device for adjusting the focus of a film camera (1), in which a measuring device (7) is arranged in the region of the film camera (1) in order to obtain distance information which can be used for adjusting the focus of the film camera (1), wherein the measuring device (7) consists of a real image camera (5) and a 3D sensor (6) which are arranged fixedly on a common carrier (4), and that the device comprises a computing unit that is adapted to produce a real image augmented with depth information, **characterised in that** the device is adapted to calculate this real image augmented with depth information into the image of the film camera (1) by means of an image transformation.

19. Device according to claim 18, **characterised in that** the carrier (4) is detachably attached to the film camera (1).

20. Device according to one of claims 18 or 19, **characterised in that** the real image camera (5) of the measuring device (7) comprises an image sensor with HDR function (High Dynamic Range Image).

21. Device according to one of claims 18 to 20, **characterised in that** a first display device is provided to display the real image of the measuring device (7) into which distance information is superimposed.

22. Device according to one of claims 18 to 21, **characterised in that** a further display device is provided to display the image of the film camera (1) in which distance information is superimposed.

23. Device according to one of claims 18 to 22, **characterised in that** a video overlay unit is provided to calculate the real image of the measuring device (7) into the image of the film camera (1).

24. Device according to one of claims 18 to 23, **characterised in that** the measuring device (7) is arranged on a lens hood of the film camera.

25. Device according to one of claims 18 to 24, **characterised in that** an operating element for setting the focus is provided which has at least one stop associated with one distance of a group of picture elements.

## Revendications

1. Procédé de réglage de mise au point d'une caméra (1) selon lequel avec un appareil de mesure installé dans la zone de la caméra (1) on récupère des informations de distance utilisées pour le réglage de la mise au point de la caméra (1),
procédé selon lequel
- l'appareil de mesure (7) établit d'une part une image réelle et d'autre part une image de profondeur
- l'appareil de mesure (7) établit une image réelle enrichie avec cette image réelle de l'appareil de mesure et cette image de profondeur de l'appareil de mesure,
procédé **caractérisé en ce que**
- on intègre par calcul cette image réelle enrichie avec l'information de profondeur par une transformation d'image dans l'image de la caméra (1).

2. Procédé selon la revendication 1,
**caractérisé en ce que**
l'image réelle de l'appareil de mesure (7) a une grande profondeur de champ qui couvre de préférence l'ensemble de la plage de distance prévisible pour la prise de vue.

3. Procédé selon l'une des revendications 1 ou 2,
**caractérisé en ce qu'**
un dispositif d'affichage présente l'image réelle de l'appareil de mesure (7) dans laquelle sont intégrées sélectivement les informations de distance.

4. Procédé selon l'une des revendications 1 à 3,
**caractérisé en ce qu'**
un dispositif d'affichage présente l'image de la caméra (1) dans laquelle sont intégrées sélectivement les informations de distance.

5. Procédé selon les revendications 3 et 4,
**caractérisé en ce que**
l'image réelle de l'appareil de mesure (7) et l'image de la caméra (1) peuvent être affichées de façon commutée ou superposée exactement en perspective.

6. Procédé selon l'une des revendications 3 à 5,
**caractérisé en ce que**
les informations de distance concernent le réglage de la mise au point de la caméra (1).

7. Procédé selon la revendication 6,
**caractérisé en ce que**
on intègre comme superposition la distance de chaque pixel ou de zone d'image cohérente pour le plan de mise au point, en couleur ou avec un motif.

8. Procédé selon l'une des revendications 1 à 7,
**caractérisé en ce qu'**
on suit des objets dans l'image de la caméra (1).

9. Procédé selon la revendication 8,
**caractérisé en ce que**
le suivi est fait sur l'image réelle de l'appareil de mesure (7) et ensuite les résultats sont transférés dans l'image de la caméra (1).

10. Procédé selon l'une des revendications 1 à 9,
**caractérisé en ce que**
la transformation d'image se fait par des algorithmes de reconnaissance d'image et de reconnaissance de caractéristique avec translation, rotation, rectification et mise à l'échelle des vues.

11. Procédé selon l'une des revendications 1 à 9,
**caractérisé en ce que**
la transformation de l'image se fait en prédéfinissant les paramètres géométriques et optiques de la caméra (1) et de l'appareil de mesure et mise en place respective.

12. Procédé selon l'une des revendications 1 à 9,
**caractérisé en ce que**
la transformation d'image se fait par l'imbrication manuelle de la représentation de l'image de la caméra et de l'image réelle ou de l'image de profondeur de l'appareil de mesure sur le dispositif d'affichage.

13. Procédé selon l'une des revendications 1 à 12,
**caractérisé en ce que**
sur le fondement de l'information de profondeur on regroupe des zones cohérentes de l'image réelle en éléments de groupes qui sont transférés dans l'image de la caméra (1) et qui peuvent être sélectionné respectivement, séparément.

14. Procédé selon la revendication 13,
**caractérisé en ce que**
les différents éléments peuvent être sélectionnés.

15. Procédé selon l'une des revendications 12 ou 14,
**caractérisé en ce que**
la distance d'un premier groupe d'un plan focal est associée à une première butée de l'appareil de commande et
une autre distance d'un autre groupe du plan focal est associée à une autre butée de l'appareil de commande.

16. Procédé selon l'une des revendications 13 à 15,
**caractérisé en ce que**
les différents éléments ou groupes sont suivis sélectivement.

17. Procédé selon l'une des revendications 1 à 16,
**caractérisé en ce que**
les données d'image et les données de profondeur de la caméra (1) sont enregistrées en commun et de façon combinée à un signal de code temporel.

18. Dispositif de réglage de la mise au point d'une caméra (1)
selon lequel un appareil de mesure (7) est installé dans la zone de la caméra (1) pour obtenir des informations de distance utilisable pour le réglage de la mise au point de la caméra (1),
dispositif dans lequel
l'appareil de mesure (7) se compose d'une caméra d'images réelles (5) et d'un capteur 3D (6) qui sont installés solidairement sur un support commun (4) et le dispositif a une unité de calcul pour réaliser une image réelle enrichie avec des informations de profondeur,
dispositif **caractérisé en ce que**
il est en outre conçu pour intégrer par calcul, cette image réelle enrichie de l'information de profondeur par une transformation d'image, dans l'image de la caméra (1).

19. Dispositif selon la revendication 18,
**caractérisé en ce que**
le support (4) est fixé de manière amovible à la caméra (1).

20. Dispositif selon l'une des revendications 18 ou 19,
**caractérisé en ce que**
la caméra d'image réelle (5) de l'appareil de mesure (7) a un capteur d'image avec une fonction HDR (plage dynamique élevée).

21. Dispositif selon l'une des revendications 18 à 20,
caractérisée en ce qui
est prévu un premier dispositif d'affichage pour afficher l'image réelle de l'appareil de mesure (7) dans laquelle sont intégrées dans les informations de distance.

22. Dispositif selon l'une des revendications 18 à 21,
**caractérisé par** un autre dispositif d'affichage pour afficher l'image de la caméra (1) dans laquelle sont intégrées des informations de distance.

23. Dispositif selon l'une des revendications 18 à 22,
**caractérisé par** une unité de superposition vidéo pour intégrer par calcul l'image réelle de l'appareil de mesure (7) dans l'image de la caméra (1).

24. Dispositif selon l'une des revendications 18 à 23,
**caractérisé en ce que**
l'appareil de mesure (7) est installé sur un parasoleil de la caméra (1).

25. Dispositif selon l'une des revendications 18 à 24,
**caractérisé par** un élément de commande pour régler la mise au point et qui a au moins une butée associée à la distance d'un groupe d'éléments d'image.
